# EUROPEAN PATENT SPECIFICATION

(11) **EP 4 703 098 B1**
(45) Date of publication and mention of the grant of the patent: **04.11.2026**
(21) Application number: 25192594.7
(22) Date of filing: 29.07.2025
(51) Int. Cl.: B25J 17/00, F16D 3/38, B62D 57/032

(54) **SIMULATION ROBOT ANKLE MECHANISM**
SIMULATION ROBOT KNÖCHELMECHANISMUS
MÉCANISME DE CHEVILLE DE ROBOT SIMULÉ

(30) Priority: 03.09.2024 CN 202411229085; 03.09.2024 CN 202422162484 U
(43) Date of publication of application: 04.03.2026
(73) Proprietor: Booster Robotics Technology Co., Ltd, Beijing (CN)
(72) Inventor: LI, Kang, Beijing (CN)
(74) Representative: Bayramoglu et al.

(56) References cited:
- CN-A- 111 688 839
- CN-A- 116 277 124
- CN-U- 214 265 581
- CN-U- 215 322 952
- CN-U- 221 091 033
- JP-U- H0 673 461
- US-A1- 2019 376 562

## Description

### TECHNICAL FIELD

This disclosure belongs to technical field of robots, and in particular, to a simulation robot ankle mechanism.

### BACKGROUND

With the deepening of people's understanding of the intelligent essence of robot technology, robot technology has begun to continuously penetrate into various fields of human activities. Combined with the application characteristics of these fields, people have developed a variety of special robots and various intelligent robots with perception, decision-making, action and interaction capabilities.

A robot is a machine device that performs work automatically, which can receive human commands, run pre-programmed programs, or act in accordance with principles and guidelines formulated by artificial intelligence technology. The robot is a product of advanced integration cybernetics, mechanical electronics, computers, materials and bionics, and has important uses in various fields such as industry, medicine, agriculture, service industry, construction industry, and even military.

For simulation robots, a reliable mechanical structure design is a prerequisite for ensuring the realization of robot software control or programmed actions. Especially for humanoid bipedal robots, the weight distribution of the legs is an important factor affecting the performance of the robot, and the ankle part, as a supporting part of the leg, also plays a crucial role. The layout compactness, joint integration degree, and universality of the ankle structure are also critical. How to design a simulation robot ankle mechanism with a compact layout, a high joint integration degree, and high flexibility has important application value. CN221091033U discloses a robot leg structure which comprises a shank, an ankle and a sole, the ankle comprises a sole-ankle connecting base, a cross-shaped connecting piece, a first rotating piece and a second rotating piece, the sole-ankle connecting base is connected with the sole, two sets of key groove holes are formed in the cross-shaped connecting piece, the axes of the two sets of key groove holes are orthogonal, and the first rotating piece is connected with the second rotating piece. The first rotating piece is connected with the cross-shaped connecting piece through a group of key slot holes, two ends of the first rotating piece are exposed out of the key slot holes and are rotationally connected with the palm-ankle connecting seat, the second rotating piece is connected with the cross-shaped connecting piece through another group of key slot holes, two ends of the second rotating piece are exposed out of the key slot holes and are rotationally connected with the crus, and the crus is rotationally connected with the palm-ankle connecting seat. Therefore, the shank is combined with the palm-ankle connecting seat through the cross-shaped connecting piece to form an ankle rotating joint, so that the ankle rotating joint has two degrees of freedom.

### SUMMARY

Therefore, this disclosure provides a simulation robot ankle mechanism, which has a more compact structure layout, a high degree of joint integration, and better flexibility.

To achieve the above objective, this disclosure provides a technical solution as follows: a simulation robot ankle mechanism, including an ankle assembly, where the ankle assembly includes an ankle cross shaft member and an ankle connecting rod;
a transverse accommodating groove and a longitudinal accommodating groove are formed in the ankle cross shaft member, the transverse accommodating groove is provided with a transverse hinge portion, and the longitudinal accommodating groove is provided with a longitudinal hinge portion; the transverse hinge portion and the longitudinal hinge portion are distributed in a cross shape; and
a shank assembly is arranged above the ankle assembly, and the shank assembly includes a shank structural member; a foot plate adapter is arranged at a lower end of the ankle connecting rod; a first hinge clamping groove is formed at a lower end of the shank structural member, and a second hinge clamping groove is formed in the foot plate adapter;
the transverse hinge portion is hinged to the first hinge clamping groove; the longitudinal hinge portion is hinged to the second hinge clamping groove;
the transverse hinge portion includes a first ankle transverse shaft needle roller bearing and a first ankle transverse shaft body; the first ankle transverse shaft needle roller bearing is located inside the transverse accommodating groove; and
the longitudinal hinge portion includes a second ankle transverse shaft needle roller bearing and a second ankle transverse shaft body; the second ankle transverse shaft needle roller bearing is located inside the longitudinal accommodating groove.

The transverse hinge portion further includes a left ankle transverse shaft gasket, a left ankle shaft end screw, a right ankle transverse shaft gasket, and a right ankle shaft end screw;
the first ankle transverse shaft body passes through a center of the first ankle transverse shaft needle roller bearing, a center of the left ankle transverse shaft gasket, and a center of the right ankle transverse shaft gasket; the left ankle transverse shaft gasket is filled on one side of the transverse accommodating groove, and the right ankle transverse shaft gasket is filled on the other side of the transverse accommodating groove;
one end of the first ankle transverse shaft body is exposed on an outer side of the left ankle transverse shaft gasket, and the other end of the first ankle transverse shaft body is exposed on an outer side of the right ankle transverse shaft gasket; the first hinge clamping groove is hinged to the first ankle transverse shaft body of the transverse hinge portion; and
the left ankle shaft end screw is connected to one end of the first ankle transverse shaft body, and the right ankle shaft end screw is connected to the other end of the first ankle transverse shaft body.

As a preferred solution of the simulation robot ankle mechanism, the longitudinal hinge portion further includes a front ankle transverse shaft gasket, a front ankle shaft end screw, a rear ankle transverse shaft gasket, and a rear ankle shaft end screw;
the second ankle transverse shaft body passes through a center of the second ankle transverse shaft needle roller bearing, a center of the front ankle transverse shaft gasket, and a center of the rear ankle transverse shaft gasket; the front ankle transverse shaft gasket is filled on one side of the longitudinal accommodating groove, and the rear ankle transverse shaft gasket is filled on the other side of the longitudinal accommodating groove;
one end of the second ankle transverse shaft body is exposed on an outer side of the front ankle transverse shaft gasket, and the other end of the second ankle transverse shaft body is exposed on an outer side of the rear ankle transverse shaft gasket; the second hinge clamping groove is hinged to the second ankle transverse shaft body of the longitudinal hinge portion; and
the front ankle shaft end screw is connected to one end of the second ankle transverse shaft body, and the rear ankle shaft end screw is connected to the other end of the second ankle transverse shaft body.

As a preferred solution of the simulation robot ankle mechanism, the shank assembly further includes a knee joint power output structural member, a knee joint passive end structural member, a first ankle joint drive motor, a second ankle joint drive motor, a first rocker arm swing member, and a second rocker arm swing member; the ankle assembly includes an ankle cross shaft member and an ankle connecting rod;
a knee joint drive motor is arranged between the knee joint power output structural member and the knee joint passive end structural member; a power output end of the knee joint drive motor is connected to the knee joint power output structural member, and the other end of the knee joint drive motor is connected to the knee joint passive end structural member;
an upper portion of the shank structural member is connected between a lower portion of the knee joint power output structural member and a lower portion of the knee joint passive end structural member, a lower portion of the shank structural member is connected to the ankle cross shaft member, and the ankle cross shaft member is fixed above the foot plate assembly;
a first motor mounting position and a second motor mounting position are formed on the shank structural member; the first ankle joint drive motor is fixed to the first motor mounting position, a power output end of the first ankle joint drive motor is connected to an upper portion of the first rocker arm swing member, and a lower portion of the first rocker arm swing member is connected to one side of the ankle connecting rod; and
the second ankle joint drive motor is fixed to the second motor mounting position, a power output end of the second ankle joint drive motor is connected to an upper portion of the second rocker arm swing member, and a lower portion of the second rocker arm swing member is connected to the other side of the ankle connecting rod.

As a preferred solution of the simulation robot ankle mechanism, an orientation of the power output end of the first ankle joint drive motor is opposite to an orientation of the power output end of the second ankle joint drive motor; and a length of the first rocker arm swing member is greater than that of the second rocker arm swing member.

As a preferred solution of the simulation robot ankle mechanism, the first rocker arm swing member includes an ankle long connecting rod, a first ankle rocker arm swing member, a first spherical bearing, a first connecting rod pin shaft, and a second spherical bearing;
a first mounting hole is formed in an upper portion of the ankle long connecting rod, a second mounting hole is formed in a lower portion of the ankle long connecting rod, and the first ankle rocker arm swing member is connected to the first mounting hole through the first spherical bearing and the first connecting rod pin shaft; the second spherical bearing is connected to the second mounting hole, and the ankle long connecting rod is hinged to one side of the ankle connecting rod through the second spherical bearing; and
a first drive interface is formed in the first ankle rocker arm swing member, and the first ankle rocker arm swing member is connected to the power output end of the first ankle joint drive motor through the first drive interface.

As a preferred solution of the simulation robot ankle mechanism, the second rocker arm swing member includes an ankle short connecting rod, a second ankle rocker arm swing member, a third spherical bearing, a second connecting rod pin shaft, and a fourth spherical bearing;
a third mounting hole is formed in an upper portion of the ankle short connecting rod, a fourth mounting hole is formed in a lower portion of the ankle short connecting rod, and the second ankle rocker arm swing member is connected to the third mounting hole through the third spherical bearing and the second connecting rod pin shaft; the fourth spherical bearing is connected to the fourth mounting hole, and the ankle short connecting rod is hinged to the other side of the ankle connecting rod through the fourth spherical bearing; and
a second drive interface is formed in the second ankle rocker arm swing member, and the second ankle rocker arm swing member is connected to the power output end of the second ankle joint drive motor through the second drive interface.

As a preferred solution of the simulation robot ankle mechanism, the simulation robot ankle mechanism further includes a foot plate assembly, where the foot plate adapter is fixed above the foot plate assembly.

The beneficial effects of this disclosure are as follows: an ankle assembly is included, where the ankle assembly includes an ankle cross shaft member and an ankle connecting rod; a transverse accommodating groove and a longitudinal accommodating groove are formed in the ankle cross shaft member, the transverse accommodating groove is provided with a transverse hinge portion, and the longitudinal accommodating groove is provided with a longitudinal hinge portion; the transverse hinge portion and the longitudinal hinge portion are distributed in a cross shape; a shank assembly is arranged above the ankle assembly, and the shank assembly includes a shank structural member; a foot plate adapter is arranged at a lower end of the ankle connecting rod; a first hinge clamping groove is formed at a lower end of the shank structural member, and a second hinge clamping groove is formed in the foot plate adapter; the transverse hinge portion is hinged to the first hinge clamping groove; and the longitudinal hinge portion is hinged to the second hinge clamping groove. According to this disclosure, the ankle structure is high in overall layout compactness and high in joint integration degree, so that a large movement range of a robot can be achieved, and flexibility and universality are improved.

### BRIEF DESCRIPTION OF THE DRAWINGS

To describe the technical solutions in the implementations or the prior art of this disclosure more clearly, a brief introduction will be given below to the drawings required in the description of the implementations or the prior art. Apparently, the drawings in the following description are merely exemplary, and those of ordinary skill in the art may further derive other implementation drawings according to the provided drawings without creative labor.

The structures, proportions, sizes and the like shown in the specification are only intended for matching the content disclosed herein and facilitating the understanding and reading of those skilled in the art rather than for limiting the implementation conditions of this disclosure. Therefore, they have no technically substantial significance, and any structural modifications, changes in proportions, or adjustments in size, without affecting the effects and objectives that this disclosure can produce and achieve, shall still fall within the scope of technical content disclosed in this disclosure.
FIG. 1 is a three-dimensional schematic diagram of a simulation robot adopting an ankle mechanism according to an embodiment of this disclosure;
FIG. 2 is a schematic diagram of a simulation robot ankle mechanism according to an embodiment of this disclosure;
FIG. 3 is a partially decomposition schematic diagram of a simulation robot ankle mechanism according to an embodiment of this disclosure;
FIG. 4 is a three-dimensional schematic diagram of a first view angle after a simulation robot ankle mechanism and a shank assembly are combined according to an embodiment of this disclosure;
FIG. 5 is a three-dimensional schematic diagram of a second view angle after a simulation robot ankle mechanism and a shank assembly are combined according to an embodiment of this disclosure; and
FIG. 6 is a decomposition schematic diagram of a simulation robot ankle mechanism and a peripheral structure according to an embodiment of this disclosure.

In the figures: 1. ankle assembly; 2. ankle cross shaft member; 3. ankle connecting rod; 4. transverse accommodating groove; 5. longitudinal accommodating groove; 6. transverse hinge portion; 7. longitudinal hinge portion; 8. shank assembly; 9. shank structural member; 10. foot plate adapter; 11. first hinge clamping groove; 12. second hinge clamping groove; 13. first ankle transverse shaft needle roller bearing; 14. first ankle transverse shaft body; 15. left ankle transverse shaft gasket; 16. left ankle shaft end screw; 17. right ankle transverse shaft gasket; 18. right ankle shaft end screw; 19. second ankle transverse shaft needle roller bearing; 20. second ankle transverse shaft body; 21. front ankle transverse shaft gasket; 22. front ankle shaft end screw; 23. rear ankle transverse shaft gasket; 24. rear ankle shaft end screw; 25. knee joint power output structural member; 26. knee joint passive end structural member; 27. first ankle joint drive motor; 28. second ankle joint drive motor; 29. first rocker arm swing member; 30. second rocker arm swing member; 31. first motor mounting position; 32. second motor mounting position; 33. ankle long connecting rod; 34. first ankle rocker arm swing member; 35. first spherical bearing; 36. first connecting rod pin shaft; 37. second spherical bearing; 38. first drive interface; 39. ankle short connecting rod; 40. second ankle rocker arm swing member; 41. third spherical bearing; 42. second connecting rod pin shaft; 43. fourth spherical bearing; 44. second drive interface; 45. foot plate assembly.

### DETAILED DESCRIPTION OF THE EMBODIMENTS

The following illustrates the implementations of this disclosure through specific embodiments, and those skilled in the art can easily understand other advantages and beneficial effects of this disclosure from the content disclosed in the specification. Apparently, the described embodiments are some but not all of the embodiments of this disclosure. Based on the embodiments in this disclosure, all other embodiments obtained by those of ordinary skill in the art without making creative labor fall within the scope of protection of this disclosure.

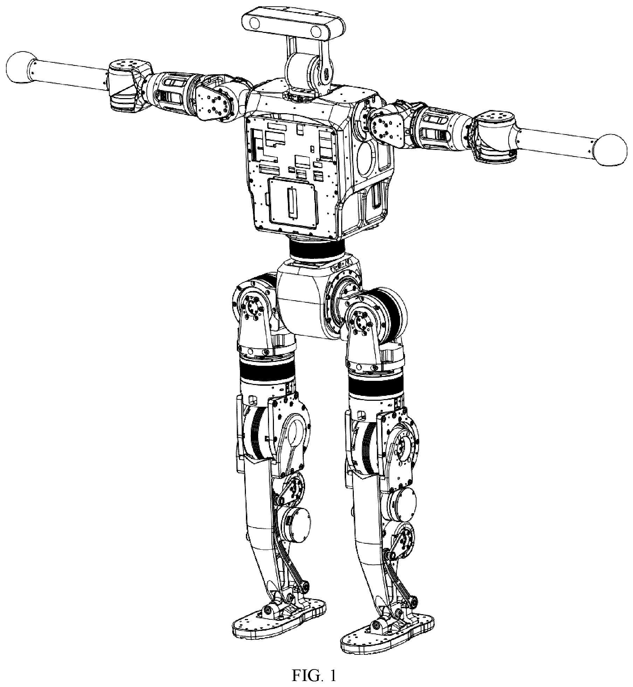

Referring to FIG. 1, the simulation robot adopting the ankle mechanism of the embodiment of this disclosure is provided with a head mechanism, a trunk mechanism, a left arm mechanism, a right arm mechanism, a hip mechanism, a left leg mechanism, and a right leg mechanism;
the head mechanism is connected to an upper end of the trunk mechanism, and the head mechanism has two degrees of freedom of motion: the head mechanism performs rotation and pitching motion relative to the trunk mechanism;
the left arm mechanism is connected to a left side of the trunk mechanism, and the left arm mechanism has four degrees of freedom of motion: the left arm mechanism performs rotation motion relative to the trunk mechanism, the left arm mechanism performs pitching motion relative to the trunk mechanism, an upper arm of the left arm mechanism rotates, and an elbow of the left arm mechanism swings forwards;
the right arm mechanism is connected to a right side of the trunk mechanism, and the right arm mechanism has four degrees of freedom of motion: the right arm mechanism performs rotation motion relative to the trunk mechanism, the right arm mechanism performs pitching motion relative to the trunk mechanism, an upper arm of the right arm mechanism rotates, and an elbow of the right arm mechanism swings forwards;
the hip mechanism is connected to a lower end of the trunk mechanism, and the hip mechanism has one degree of freedom of motion: the hip mechanism performs rotation motion relative to the trunk mechanism;
the left leg mechanism is connected to a left side of the hip mechanism, and the left leg mechanism has six degrees of freedom of motion: forward swing, side swing, rotation, knee forward swing, ankle forward swing, and ankle side swing motion of the left leg mechanism; and
the right leg mechanism is connected to a right side of the hip mechanism, and the right leg mechanism has six degrees of freedom of motion: forward swing, side swing, rotation, knee forward swing, ankle forward swing, and ankle side swing motion of the right leg mechanism.

A main controller and drive motors of the head mechanism, the trunk mechanism, the left arm mechanism, the right arm mechanism, the hip mechanism, the left leg mechanism, and the right leg mechanism are powered through a battery pack, and actions of the head mechanism, the trunk mechanism, the left arm mechanism, the right arm mechanism, the hip mechanism, the left leg mechanism, and the right leg mechanism are controlled through the main controller, so that the head mechanism performs rotation and pitching motion relative to the trunk mechanism, the left arm mechanism performs rotation motion relative to the trunk mechanism, the left arm mechanism performs pitching motion relative to the trunk mechanism, and the upper arm of the left arm mechanism rotates, and the elbow of the left arm mechanism swings forwards; the right arm mechanism performs rotation motion relative to the trunk mechanism, the right arm mechanism performs pitching motion relative to the trunk mechanism, and the upper arm of the right arm mechanism rotates, and the elbow of the right arm mechanism swings forwards; the hip mechanism performs rotation motion relative to the trunk mechanism; rotation of the hip mechanism relative to the left leg mechanism is achieved; rotation of the hip mechanism relative to the right leg mechanism is achieved; forward swing, side swing, rotation, knee forward swing, ankle forward swing, and ankle side swing motion of the left leg mechanism are achieved; and forward swing, side swing, rotation, knee forward swing, ankle forward swing, and ankle side swing motion of the right leg mechanism are achieved.

A binocular camera is mounted at a top end of the head mechanism. Rotation and pitching motion of the head binocular camera can be achieved through a head rotation drive motor and a head pitching drive motor. The head rotation drive motor for controlling the rotation of the binocular camera is fixed inside a trunk frame of the trunk mechanism, an output flange of the head rotation drive motor is connected to a fixed end of the head pitching drive motor for controlling the pitching of the binocular camera, and an output flange of the head pitching drive motor for controlling the pitching of the binocular camera is connected to a camera mounting assembly, thereby realizing the movement of the binocular camera.

A left arm rotation drive motor in the trunk frame can drive a left arm pitching drive motor, a left upper arm, a left elbow rotation drive motor, a left elbow swing drive motor, and a left forearm to rotate. The left arm pitching drive motor can drive the left upper arm, the left elbow rotation drive motor, the left elbow swing drive motor, and the left forearm to pitch. The left elbow rotation drive motor can drive the left elbow swing drive motor and the left forearm to rotate, and the left elbow swing drive motor can drive the left forearm to swing. A right arm rotation drive motor in the trunk frame can drive a right arm pitching drive motor, a right upper arm, a right elbow rotation drive motor, a right elbow swing drive motor, and a right forearm to rotate. The right arm pitching drive motor can drive the right upper arm, the right elbow rotation drive motor, the right elbow swing drive motor, and the right forearm to pitch. The right elbow rotation drive motor can drive the right elbow swing drive motor and the right forearm to rotate, and the right elbow swing drive motor can drive the right forearm to swing. A waist rotation drive motor can drive a hip structural member to rotate through a hip flange. A left leg swing drive motor in the hip structural member can drive the entire left leg mechanism to swing, and a right leg swing drive motor in the hip structural member can drive the entire right leg mechanism to swing.

For the left leg swing drive motor and the right leg swing drive motor, a clamping structural member can be connected to the hip structural member, and the clamping structural member fixes the left leg swing drive motor and the right leg swing drive motor in the hip structural member through a bolt. The hip mechanism drives a cross-leg drive assembly to swing through a leg swing drive motor, and a cross-leg drive motor of the cross-leg drive assembly can drive a thigh assembly and a shank assembly to stride outwards. The cross-leg drive motor is fixed by a cross-swing output structural member and a cross-swing passive end structural member, and performs power output through the cross-swing output structural member. The leg rotation drive motor can drive a leg rotation power output structural member between the cross-swing output structural member and the cross-swing passive end structural member to rotate, thereby driving a leg extension member, a knee joint drive motor, and a lower shank assembly to rotate as a whole.

The knee joint drive motor can drive the shank assembly to swing back and forth. The knee joint drive motor is fixed by a knee joint passive end structural member and a knee joint power output structural member, and the knee joint drive motor drives a shank structural member to swing back and forth through the knee joint power output structural member. A first ankle joint drive motor drives an ankle assembly to swing through a first rocker arm swing member, and a second ankle j oint drive motor drives the ankle assembly to swing through a second rocker arm swing member. The lower portions of the first rocker arm swing member and the second rocker arm swing member swing relative to an ankle connecting rod, and the shank structural member swings relative to an ankle cross shaft member. When the first ankle joint drive motor drives the first rocker arm swing member and the second ankle joint drive motor drives the second rocker arm swing member in a same direction, the ankle cross shaft member performs forward swing motion relative to the shank structural member. When the first ankle joint drive motor drives the first rocker arm swing member and the second ankle joint drive motor drives the second rocker arm swing member in an opposite direction, the ankle cross shaft member performs side swing motion relative to the shank structural member. The ankle assembly can drive a foot plate assembly to perform corresponding forward swing and side swing motion.

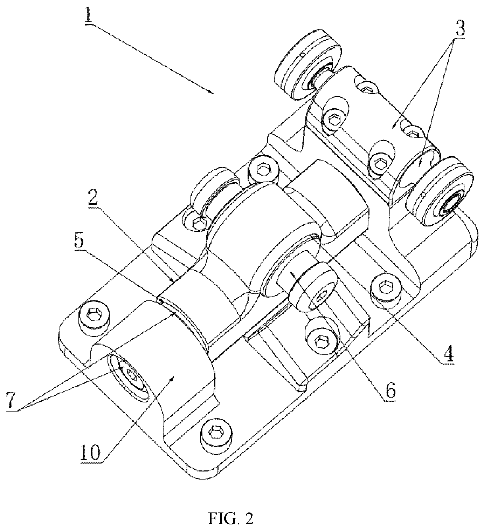

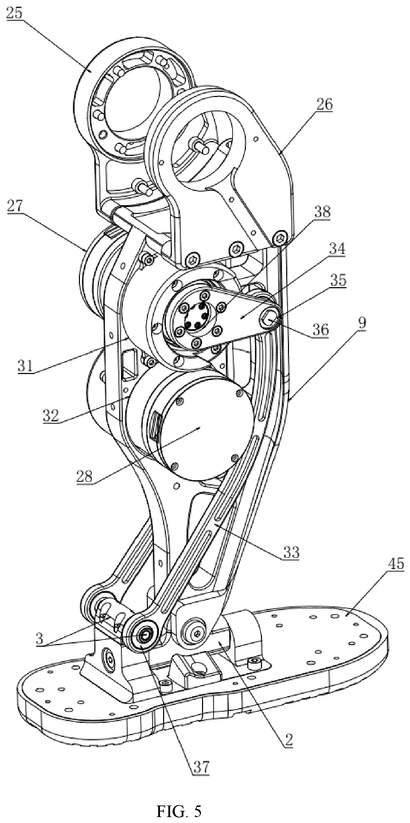

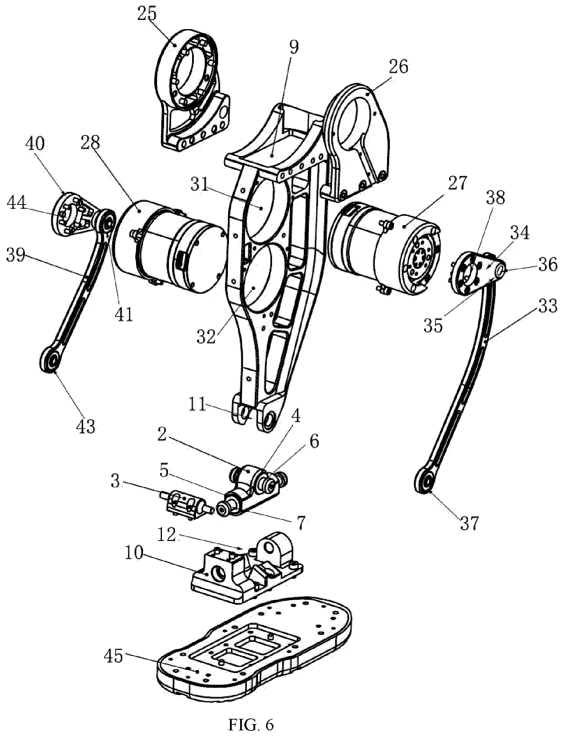

On the basis of the simulation robot developed by the applicant:
referring to FIG. 2, FIG. 3, FIG. 4, FIG. 5, and FIG. 6, this disclosure provides a simulation robot ankle mechanism, including an ankle assembly 1, where the ankle assembly 1 includes an ankle cross shaft member 2 and an ankle connecting rod 3;
a transverse accommodating groove 4 and a longitudinal accommodating groove 5 are formed in the ankle cross shaft member 2, the transverse accommodating groove 4 is provided with a transverse hinge portion 6, and the longitudinal accommodating groove 5 is provided with a longitudinal hinge portion 7; and the transverse hinge portion 6 and the longitudinal hinge portion 7 are distributed in a cross shape;
a shank assembly 8 is arranged above the ankle assembly 1, and the shank assembly 8 includes a shank structural member 9; a foot plate adapter 10 is arranged at a lower end of the ankle connecting rod 3; a first hinge clamping groove 11 is formed at a lower end of the shank structural member 9, and a second hinge clamping groove 12 is formed in the foot plate adapter 10; a foot plate assembly 45 is further included, and the foot plate adapter 10 is fixed above the foot plate assembly 45;
the transverse hinge portion 6 is hinged to the first hinge clamping groove 11; and the longitudinal hinge portion 7 is hinged to the second hinge clamping groove 12.

Specifically, the first hinge clamping groove 11 and the transverse hinge portion 6 serve to connect the shank structural member 9 and the ankle cross shaft member 2, and the shank structural member 9 rotates relative to the transverse hinge portion 6 of the ankle cross shaft member 2 through the first hinge clamping groove 11. The second hinge clamping groove 12 and the longitudinal hinge portion 7 serve to connect the foot plate adapter 10 and the ankle cross shaft member 2, and the foot plate adapter 10 rotates relative to the longitudinal hinge portion 7 of the ankle cross shaft member 2 through the second hinge clamping groove 12. The transverse hinge portion 6 and the longitudinal hinge portion 7 form a cross-shaped ankle cross shaft member 2 through the transverse accommodating groove 4 and the longitudinal accommodating groove 5, so that the structure is more compact, and the activity flexibility is higher.

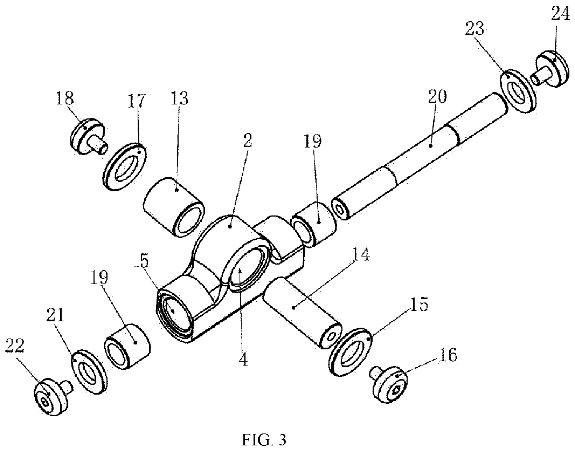

Referring to FIG. 2 and FIG. 3, in this embodiment, the transverse hinge portion 6 includes a first ankle transverse shaft needle roller bearing 13, a first ankle transverse shaft body 14, a left ankle transverse shaft gasket 15, a left ankle shaft end screw 16, a right ankle transverse shaft gasket 17, and a right ankle shaft end screw 18; the first ankle transverse shaft needle roller bearing 13 is located inside the transverse accommodating groove 4, and the first ankle transverse shaft body 14 passes through a center of the first ankle transverse shaft needle roller bearing 13, a center of the left ankle transverse shaft gasket 15, and a center of the right ankle transverse shaft gasket 17; the left ankle transverse shaft gasket 15 is filled on one side of the transverse accommodating groove 4, and the right ankle transverse shaft gasket 17 is filled on the other side of the transverse accommodating groove 4; one end of the first ankle transverse shaft body 14 is exposed on an outer side of the left ankle transverse shaft gasket 15, and the other end of the first ankle transverse shaft body 14 is exposed on an outer side of the right ankle transverse shaft gasket 17; the first hinge clamping groove 11 is hinged to the first ankle transverse shaft body 14 of the transverse hinge portion 6; and the left ankle shaft end screw 16 is connected to one end of the first ankle transverse shaft body 14, and the right ankle shaft end screw 18 is connected to the other end of the first ankle transverse shaft body 14.

Specifically, the first ankle transverse shaft needle roller bearing 13 is sleeved inside the transverse accommodating groove 4, the first ankle transverse shaft body 14 is sleeved inside the first ankle transverse shaft needle roller bearing 13, and the left ankle transverse shaft gasket 15 and the right ankle transverse shaft gasket 17 are respectively sleeved on left and right sides of the transverse accommodating groove 4. After a lower portion of the shank structural member 9 is connected to the first ankle transverse shaft body 14 through the first hinge clamping groove 11, the shank structural member 9 is limited through the left ankle shaft end screw 16 and the right ankle shaft end screw 18, so that the first ankle transverse shaft body 14 can rotate relative to the transverse accommodating groove 4, and then the shank structural member 9 rotates relative to the transverse hinge portion 6 of the ankle cross shaft member 2 through the first hinge clamping groove 11.

The longitudinal hinge portion 7 includes a second ankle transverse shaft needle roller bearing 19, a second ankle transverse shaft body 20, a front ankle transverse shaft gasket 21, a front ankle shaft end screw 22, a rear ankle transverse shaft gasket 23, and a rear ankle shaft end screw 24; the second ankle transverse shaft needle roller bearing 19 is located inside the longitudinal accommodating groove 5, and the second ankle transverse shaft body 20 passes through a center of the second ankle transverse shaft needle roller bearing 19, a center of the front ankle transverse shaft gasket 21, and a center of the rear ankle transverse shaft gasket 23; the front ankle transverse shaft gasket 21 is filled on one side of the longitudinal accommodating groove 5, and the rear ankle transverse shaft gasket 23 is filled on the other side of the longitudinal accommodating groove 5; one end of the second ankle transverse shaft body 20 is exposed on an outer side of the front ankle transverse shaft gasket 21, and the other end of the second ankle transverse shaft body 20 is exposed on an outer side of the rear ankle transverse shaft gasket 23; the second hinge clamping groove 12 is hinged to the second ankle transverse shaft body 20 of the longitudinal hinge portion 7; and the front ankle shaft end screw 22 is connected to one end of the second ankle transverse shaft body 20, and the rear ankle shaft end screw 24 is connected to the other end of the second ankle transverse shaft body 20.

Specifically, the second ankle transverse shaft needle roller bearing 19 is sleeved inside the longitudinal accommodating groove 5, the second ankle transverse shaft body 20 is sleeved inside the second ankle transverse shaft needle roller bearing 19, and the front ankle transverse shaft gasket 21 and the rear ankle transverse shaft gasket 23 are respectively sleeved on front and rear sides of the longitudinal accommodating groove 5. After the foot plate adapter 10 is connected to the second ankle transverse shaft body 20 through the second hinge clamping groove 12, the foot plate adapter 10 is limited through the front ankle shaft end screw 22 and the rear ankle shaft end screw 24, so that the second ankle transverse shaft body 20 can rotate relative to the longitudinal accommodating groove 5, and then the foot plate adapter 10 rotates relative to the longitudinal hinge portion 7 of the ankle cross shaft member 2 through the second hinge clamping groove 12.

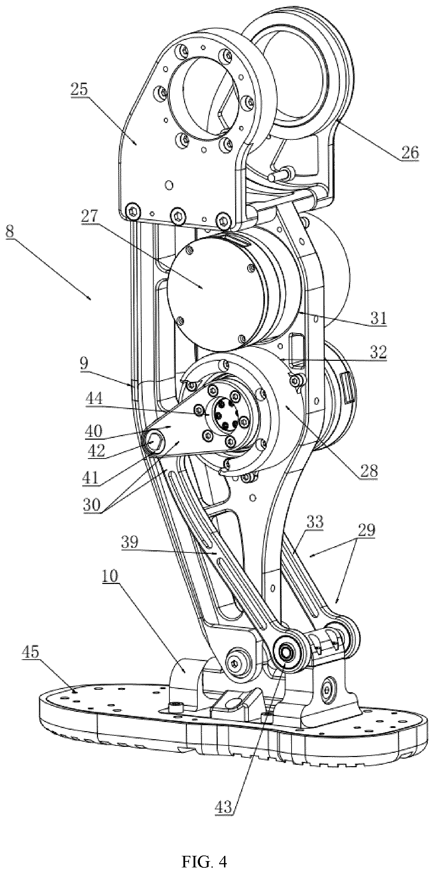

Referring to FIG. 4, FIG. 5 and FIG. 6, in this embodiment, the shank assembly 8 includes a knee joint power output structural member 25, a knee joint passive end structural member 26, a first ankle joint drive motor 27, a second ankle joint drive motor 28, a first rocker arm swing member 29, and a second rocker arm swing member 30; the ankle assembly 1 includes an ankle cross shaft member 2 and an ankle connecting rod 3; and the knee joint drive motor is arranged between the knee joint power output structural member 25 and the knee joint passive end structural member 26; the power output end of the knee joint drive motor is connected to the knee joint power output structural member 25, and the other end of the knee joint drive motor is connected to the knee joint passive end structural member 26; the upper portion of the shank structural member 9 is connected between the lower portion of the knee joint power output structural member 25 and the lower portion of the knee joint passive end structural member 26, the lower portion of the shank structural member 9 is connected to the ankle cross shaft member 2, and the ankle cross shaft member 2 is fixed above the foot plate assembly 45; the first motor mounting position 31 and the second motor mounting position 32 are formed on the shank structural member 9; the first ankle joint drive motor 27 is fixed to the first motor mounting position 31, the power output end of the first ankle joint drive motor 27 is connected to the upper portion of the first rocker arm swing member 29, and the lower portion of the first rocker arm swing member 29 is connected to one side of the ankle connecting rod 3; and the second ankle joint drive motor 28 is fixed to the second motor mounting position 32, the power output end of the second ankle joint drive motor 28 is connected to the upper portion of the second rocker arm swing member 30, and the lower portion of the second rocker arm swing member 30 is connected to the other side of the ankle connecting rod 3.

Specifically, the knee joint drive motor is fixed by the knee joint passive end structural member 26 and the knee joint power output structural member 25, and the knee joint drive motor drives the shank structural member 9 to swing back and forth through the knee joint power output structural member 25. The first ankle joint drive motor 27 drives an ankle assembly 1 to swing through the first rocker arm swing member 29, and the second ankle joint drive motor 28 drives the ankle assembly to swing through the second rocker arm swing member 30. The lower portions of the first rocker arm swing member 29 and the second rocker arm swing member 30 swing relative to the ankle connecting rod 3, and the shank structural member 9 swings relative to the ankle cross shaft member 2. When the first ankle joint drive motor 27 drives the first rocker arm swing member 29 and the second ankle joint drive motor 28 drives the second rocker arm swing member 30 in the same direction, the ankle cross shaft member 2 performs forward swing motion relative to the shank structural member 9. When the first ankle joint drive motor 27 drives the first rocker arm swing member 29 and the second ankle joint drive motor 28 drives the second rocker arm swing member 30 in the opposite direction, the ankle cross shaft member 2 performs side swing motion relative to the shank structural member 9. The ankle assembly 1 can drive the foot plate assembly 45 to perform corresponding forward swing and side swing motion.

An orientation of the power output end of the first ankle joint drive motor 27 is opposite to an orientation of the power output end of the second ankle joint drive motor 28; and a length of the first rocker arm swing member 29 is greater than that of the second rocker arm swing member 30. Thus, when the first ankle joint drive motor 27 drives the first rocker arm swing member 29 and the second ankle joint drive motor 28 drives the second rocker arm swing member 30 in the same direction, the ankle cross shaft member 2 performs forward swing motion relative to the shank structural member 9. When the first ankle joint drive motor 27 drives the first rocker arm swing member 29 and the second ankle joint drive motor 28 drives the second rocker arm swing member 30 in the opposite direction, the ankle cross shaft member 2 performs side swing motion relative to the shank structural member 9. In addition, the first ankle joint drive motor 27, the second ankle joint drive motor 28, the first rocker arm swing member 29, and the second rocker arm swing member 30 are more compact in structure, and the activity flexibility is higher.

Referring to FIG. 4, FIG. 5, and FIG. 6 again, the first rocker arm swing member 29 includes an ankle long connecting rod 33, a first ankle rocker arm swing member 34, a first spherical bearing 35, a first connecting rod pin shaft 36, and a second spherical bearing 37; a first mounting hole is formed in an upper portion of the ankle long connecting rod 33, a second mounting hole is formed in a lower portion of the ankle long connecting rod 33, and the first ankle rocker arm swing member 34 is connected to the first mounting hole through the first spherical bearing 35 and the first connecting rod pin shaft 36; the second spherical bearing 37 is connected to the second mounting hole, and the ankle long connecting rod 33 is hinged to one side of the ankle connecting rod 3 through the second spherical bearing 37; and a first drive interface 38 is formed in the first ankle rocker arm swing member 34, and the first ankle rocker arm swing member 34 is connected to the power output end of the first ankle joint drive motor 27 through the first drive interface 38. The second rocker arm swing member 30 includes an ankle short connecting rod 39, a second ankle rocker arm swing member 40, a third spherical bearing 41, a second connecting rod pin shaft 42, and a fourth spherical bearing 43; a third mounting hole is formed in an upper portion of the ankle short connecting rod 39, a fourth mounting hole is formed in a lower portion of the ankle short connecting rod 39, and the second ankle rocker arm swing member 40 is connected to the third mounting hole through the third spherical bearing 41 and the second connecting rod pin shaft 42; the fourth spherical bearing 43 is connected to the fourth mounting hole, and the ankle short connecting rod 39 is hinged to the other side of the ankle connecting rod 3 through the fourth spherical bearing 43; and a second drive interface 44 is formed in the second ankle rocker arm swing member 40, and the second ankle rocker arm swing member 40 is connected to the power output end of the second ankle joint drive motor 28 through the second drive interface 44.

Specifically, the power output end of the first ankle joint drive motor 27 drives the first ankle rocker arm swing member 34 through the first drive interface 38, the first ankle rocker arm swing member 34 is hinged to the ankle long connecting rod 33 through the first spherical bearing 35 and the first connecting rod pin shaft 36, and then an upper end of the ankle long connecting rod 33 can be driven to swing through the first ankle rocker arm swing member 34. Meanwhile, a lower end of the ankle long connecting rod 33 is hinged to the ankle connecting rod 3 through the second spherical bearing 37, and the lower end of the ankle long connecting rod 33 can swing relative to the ankle connecting rod 3 in a swinging process. Meanwhile, the power output end of the second ankle joint drive motor 28 drives the second ankle rocker arm swing member 40 through the second drive interface 44, the second ankle rocker arm swing member 40 is hinged to the ankle short connecting rod 39 through the third spherical bearing 41 and the second connecting rod pin shaft 42, and then an upper end of the ankle short connecting rod 39 can be driven to swing through the second ankle rocker arm swing member 40. Meanwhile, a lower end of the ankle short connecting rod 39 is hinged to the ankle connecting rod 3 through the fourth spherical bearing 43, and the lower end of the ankle short connecting rod 39 can swing relative to the ankle connecting rod 3 in a swinging process. The first ankle joint drive motor 27 and the second ankle joint drive motor 28 operate simultaneously during the movement of the shank mechanism, and operation directions of the first ankle joint drive motor 27 and the second ankle joint drive motor 28 can be controlled to be the same or opposite. That is, when the first ankle joint drive motor 27 drives the first rocker arm swing member 29 and the second ankle joint drive motor 28 drives the second rocker arm swing member 30 in the same direction, the ankle cross shaft member 2 performs forward swing motion relative to the shank structural member 9. When the first ankle joint drive motor 27 drives the first rocker arm swing member 29 and the second ankle joint drive motor 28 drives the second rocker arm swing member 30 in the opposite direction, the ankle cross shaft member 2 performs side swing motion relative to the shank structural member 9.

In conclusion, this disclosure includes an ankle assembly 1, where the ankle assembly 1 includes an ankle cross shaft member 2 and an ankle connecting rod 3; a transverse accommodating groove 4 and a longitudinal accommodating groove 5 are formed in the ankle cross shaft member 2, the transverse accommodating groove 4 is provided with a transverse hinge portion 6, and the longitudinal accommodating groove 5 is provided with a longitudinal hinge portion 7; the transverse hinge portion 6 and the longitudinal hinge portion 7 are distributed in a cross shape; a shank assembly 8 is arranged above the ankle assembly 1, and the shank assembly 8 includes a shank structural member 9; a foot plate adapter 10 is arranged at a lower end of the ankle connecting rod 3; a first hinge clamping groove 11 is formed at a lower end of the shank structural member 9, and a second hinge clamping groove 12 is formed in the foot plate adapter 10; the transverse hinge portion 6 is hinged to the first hinge clamping groove 11; and the longitudinal hinge portion 7 is hinged to the second hinge clamping groove 12. The first hinge clamping groove 11 and the transverse hinge portion 6 serve to connect the shank structural member 9 and the ankle cross shaft member 2, and the shank structural member 9 rotates relative to the transverse hinge portion 6 of the ankle cross shaft member 2 through the first hinge clamping groove 11. The second hinge clamping groove 12 and the longitudinal hinge portion 7 serve to connect the foot plate adapter 10 and the ankle cross shaft member 2, and the foot plate adapter 10 rotates relative to the longitudinal hinge portion 7 of the ankle cross shaft member 2 through the second hinge clamping groove 12. The transverse hinge portion 6 and the longitudinal hinge portion 7 form a cross-shaped ankle cross shaft member 2 through the transverse accommodating groove 4 and the longitudinal accommodating groove 5, so that the structure is more compact, and the activity flexibility is higher. The first ankle transverse shaft needle roller bearing 13 is sleeved inside the transverse accommodating groove 4, the first ankle transverse shaft body 14 is sleeved inside the first ankle transverse shaft needle roller bearing 13, and the left ankle transverse shaft gasket 15 and the right ankle transverse shaft gasket 17 are respectively sleeved on left and right sides of the transverse accommodating groove 4. After a lower portion of the shank structural member 9 is connected to the first ankle transverse shaft body 14 through the first hinge clamping groove 11, the shank structural member 9 is limited through the left ankle shaft end screw 16 and the right ankle shaft end screw 18, so that the first ankle transverse shaft body 14 can rotate relative to the transverse accommodating groove 4, and then the shank structural member 9 rotates relative to the transverse hinge portion 6 of the ankle cross shaft member 2 through the first hinge clamping groove 11. The second ankle transverse shaft needle roller bearing 19 is sleeved inside the longitudinal accommodating groove 5, the second ankle transverse shaft body 20 is sleeved inside the second ankle transverse shaft needle roller bearing 19, and the front ankle transverse shaft gasket 21 and the rear ankle transverse shaft gasket 23 are respectively sleeved on front and rear sides of the longitudinal accommodating groove 5. After the foot plate adapter 10 is connected to the second ankle transverse shaft body 20 through the second hinge clamping groove 12, the foot plate adapter 10 is limited through the front ankle shaft end screw 22 and the rear ankle shaft end screw 24, so that the second ankle transverse shaft body 20 can rotate relative to the longitudinal accommodating groove 5, and then the foot plate adapter 10 rotates relative to the longitudinal hinge portion 7 of the ankle cross shaft member 2 through the second hinge clamping groove 12. According to this disclosure, the ankle structure is high in overall layout compactness and high in joint integration degree, so that a large movement range of a robot can be achieved, and flexibility and universality are improved.

## Claims

1. A simulation robot ankle mechanism, comprising an ankle assembly (1), wherein the ankle assembly (1) comprises an ankle cross shaft member (2), and an ankle connecting rod (3);
a transverse accommodating groove (4) and a longitudinal accommodating groove (5) are formed in the ankle cross shaft member (2), the transverse accommodating groove (4) is provided with a transverse hinge portion (6), and the longitudinal accommodating groove (5) is provided with a longitudinal hinge portion (7); and the transverse hinge portion (6) and the longitudinal hinge portion (7) are distributed in a cross shape;
a shank assembly (8) is arranged above the ankle assembly (1), and the shank assembly (8) comprises a shank structural member (9); a foot plate adapter (10) is arranged at a lower end of the ankle connecting rod (3); a first hinge clamping groove (11) is formed at a lower end of the shank structural member (9), and a second hinge clamping groove (12) is formed in the foot plate adapter (10);
the transverse hinge portion (6) is hinged to the first hinge clamping groove (11); the longitudinal hinge portion (7) is hinged to the second hinge clamping groove (12);
the transverse hinge portion (6) comprises a first ankle transverse shaft bearing (13) and a first ankle transverse shaft body (14); and
the longitudinal hinge portion (7) comprises a second ankle transverse shaft bearing (19) and a second ankle transverse shaft body (20);
**characterized in that**
the first ankle transverse shaft bearing (13) is a needle roller bearing (13) located inside the transverse accommodating groove (4);
the second ankle transverse shaft bearing (19) is a needle roller bearing (19) located inside the longitudinal accommodating groove (5);
wherein the transverse hinge portion (6) further comprises a left ankle transverse shaft gasket (15), a left ankle shaft end screw (16), a right ankle transverse shaft gasket (17), and a right ankle shaft end screw (18);
the first ankle transverse shaft body (14) passes through a center of the first ankle transverse shaft needle roller bearing (13), a center of the left ankle transverse shaft gasket (15), and a center of the right ankle transverse shaft gasket (17); the left ankle transverse shaft gasket (15) is filled on one side of the transverse accommodating groove (4), and the right ankle transverse shaft gasket (17) is filled on the other side of the transverse accommodating groove (4);
one end of the first ankle transverse shaft body (14) is exposed on an outer side of the left ankle transverse shaft gasket (15), and the other end of the first ankle transverse shaft body (14) is exposed on an outer side of the right ankle transverse shaft gasket (17); the first hinge clamping groove (11) is hinged to the first ankle transverse shaft body (14) of the transverse hinge portion (6); and
the left ankle shaft end screw (16) is connected to one end of the first ankle transverse shaft body (14), and the right ankle shaft end screw (18) is connected to the other end of the first ankle transverse shaft body (14).

2. The simulation robot ankle mechanism according to claim 1, wherein the longitudinal hinge portion (7) further comprises a front ankle transverse shaft gasket (21), a front ankle shaft end screw (22), a rear ankle transverse shaft gasket (23), and a rear ankle shaft end screw (24);
the second ankle transverse shaft body (20) passes through a center of the second ankle transverse shaft needle roller bearing (19), a center of the front ankle transverse shaft gasket (21), and a center of the rear ankle transverse shaft gasket (23); the front ankle transverse shaft gasket (21) is filled on one side of the longitudinal accommodating groove (5), and the rear ankle transverse shaft gasket (23) is filled on the other side of the longitudinal accommodating groove (5);
one end of the second ankle transverse shaft body (20) is exposed on an outer side of the front ankle transverse shaft gasket (21), and the other end of the second ankle transverse shaft body (20) is exposed on an outer side of the rear ankle transverse shaft gasket (23); the second hinge clamping groove (12) is hinged to the second ankle transverse shaft body (20) of the longitudinal hinge portion (7); and
the front ankle shaft end screw (22) is connected to one end of the second ankle transverse shaft body (20), and the rear ankle shaft end screw (24) is connected to the other end of the second ankle transverse shaft body (20).

3. The simulation robot ankle mechanism according to claim 1, wherein the shank assembly (8) further comprises a knee joint power output structural member (25), a knee joint passive end structural member (26), a first ankle joint drive motor (27), a second ankle joint drive motor (28), a first rocker arm swing member (29), and a second rocker arm swing member (30);
a knee joint drive motor is arranged between the knee joint power output structural member (25) and the knee joint passive end structural member (26); a power output end of the knee joint drive motor is connected to the knee joint power output structural member (25), and the other end of the knee joint drive motor is connected to the knee joint passive end structural member (26);
an upper portion of the shank structural member (9) is connected between a lower portion of the knee joint power output structural member (25) and a lower portion of the knee joint passive end structural member (26), a lower portion of the shank structural member (9) is connected to the ankle cross shaft member (2), and the ankle cross shaft member (2) is fixed above the foot plate assembly (45);
a first motor mounting position (31) and a second motor mounting position (32) are formed on the shank structural member (9); the first ankle joint drive motor (27) is fixed to the first motor mounting position (31), a power output end of the first ankle joint drive motor (27) is connected to an upper portion of the first rocker arm swing member (29), and a lower portion of the first rocker arm swing member (29) is connected to one side of the ankle connecting rod (3); and
the second ankle joint drive motor (28) is fixed to the second motor mounting position (32), a power output end of the second ankle joint drive motor (28) is connected to an upper portion of the second rocker arm swing member (30), and a lower portion of the second rocker arm swing member (30) is connected to the other side of the ankle connecting rod (3).

4. The simulation robot ankle mechanism according to claim 3, wherein an orientation of the power output end of the first ankle joint drive motor (27) is opposite to an orientation of the power output end of the second ankle joint drive motor (28); and a length of the first rocker arm swing member (29) is greater than that of the second rocker arm swing member (30).

5. The simulation robot ankle mechanism according to claim 3, wherein the first rocker arm swing member (29) comprises an ankle long connecting rod (33), a first ankle rocker arm swing member (34), a first spherical bearing (35), a first connecting rod pin shaft (36), and a second spherical bearing (37);
a first mounting hole is formed in an upper portion of the ankle long connecting rod (33), a second mounting hole is formed in a lower portion of the ankle long connecting rod (33), and the first ankle rocker arm swing member (34) is connected to the first mounting hole through the first spherical bearing (35) and the first connecting rod pin shaft (36); the second spherical bearing (37) is connected to the second mounting hole, and the ankle long connecting rod (33) is hinged to one side of the ankle connecting rod (3) through the second spherical bearing (37); and
a first drive interface (38) is formed in the first ankle rocker arm swing member (34), and the first ankle rocker arm swing member (34) is connected to the power output end of the first ankle joint drive motor (27) through the first drive interface (38).

6. The simulation robot ankle mechanism according to claim 3, wherein the second rocker arm swing member (30) comprises an ankle short connecting rod (39), a second ankle rocker arm swing member (40), a third spherical bearing (41), a second connecting rod pin shaft (42), and a fourth spherical bearing (43);
a third mounting hole is formed in an upper portion of the ankle short connecting rod (39), a fourth mounting hole is formed in a lower portion of the ankle short connecting rod (39), and the second ankle rocker arm swing member (40) is connected to the third mounting hole through the third spherical bearing (41) and the second connecting rod pin shaft (42); the fourth spherical bearing (43) is connected to the fourth mounting hole, and the ankle short connecting rod (39) is hinged to the other side of the ankle connecting rod (3) through the fourth spherical bearing (43); and
a second drive interface (44) is formed in the second ankle rocker arm swing member (40), and the second ankle rocker arm swing member (40) is connected to the power output end of the second ankle joint drive motor (28) through the second drive interface (44).

7. The simulation robot ankle mechanism according to claim 3, further comprising a foot plate assembly (45), wherein the foot plate adapter (10) is fixed above the foot plate assembly (45).

## Patentansprüche

1. Knöchelmechanismus eines Simulationsroboters, umfassend eine Knöchelanordnung (1), wobei die Knöchelanordnung (1) ein Knöchel-Kreuzwellenelement (2) und eine Knöchelverbindungsstange (3) umfasst;
wobei eine Queraufnahmenut (4) und eine Längsaufnahmenut (5) in dem Knöchel-Kreuzwellenelement (2) ausgebildet sind, die Queraufnahmenut (4) mit einem Quergelenkabschnitt (6) versehen ist und die Längsaufnahmenut (5) mit einem Längsgelenkabschnitt (7) versehen ist; und der Quergelenkabschnitt (6) und der Längsgelenkabschnitt (7) kreuzförmig angeordnet sind;
wobei eine Unterschenkelanordnung (8) oberhalb der Knöchelanordnung (1) angeordnet ist und die Unterschenkelanordnung (8) ein Unterschenkel-Strukturelement (9) umfasst; ein Fußplattenadapter (10) an einem unteren Ende der Knöchelverbindungsstange (3) angeordnet ist; eine erste Gelenkklemmnut (11) an einem unteren Ende des Unterschenkel-Strukturelements (9) ausgebildet ist und eine zweite Gelenkklemmnut (12) in dem Fußplattenadapter (10) ausgebildet ist;
der Quergelenkabschnitt (6) gelenkig mit der ersten Gelenkklemmnut (11) verbunden ist; der Längsgelenkabschnitt (7) gelenkig mit der zweiten Gelenkklemmnut (12) verbunden ist;
der Quergelenkabschnitt (6) ein erstes Knöchelquerwellenlager (13) und einen ersten Knöchelquerwellenkörper (14) umfasst; und
der Längsgelenkabschnitt (7) ein zweites Knöchelquerwellenlager (19) und einen zweiten Knöchelquerwellenkörper (20) umfasst;
**dadurch gekennzeichnet, dass**
das erste Knöchelquerwellenlager (13) ein innerhalb der Queraufnahmenut (4) angeordnetes Nadellager (13) ist;
das zweite Knöchelquerwellenlager (19) ein innerhalb der Längsaufnahmenut (5) angeordnetes Nadellager (19) ist;
Wobei der Quergelenkabschnitt (6) ferner eine linke Knöchelquerwellen-Dichtungsscheibe (15), eine linke Knöchelwellen-Endschraube (16), eine rechte Knöchelquerwellen-Dichtungsscheibe (17) und eine rechte Knöchelwellen-Endschraube (18) umfasst;
der erste Knöchelquerwellenkörper (14) durch eine Mitte des ersten Knöchelquerwellenlager (13), eine Mitte der linken Knöchelquerwellenscheibe (15) und eine Mitte der rechten Knöchelquerwellen-Dichtungsscheibe (17) verläuft; die linke Knöchelquerwellen-Dichtungsscheibe (15) auf einer Seite der Queraufnahmenut (4) eingesetzt ist und die rechte Knöchelquerwellen-Dichtungsscheibe (17) auf der anderen Seite der Queraufnahmenut (4) eingesetzt ist;
ein Ende des ersten Knöchelquerwellenkörpers (14) an einer Außenseite der linken Knöchelquerwellen-Dichtungsscheibe (15) freiliegt und das andere Ende des ersten Knöchelquerwellenkörpers (14) an einer Außenseite der rechten Knöchelquerwellen-Dichtungsscheibe (17) freiliegt; die erste Gelenkklemmnut (11) gelenkig mit dem ersten Knöchelquerwellenkörper (14) des Quergelenkabschnitts (6) verbunden ist; und
die linke Knöchelwellen-Endschraube (16) mit einem Ende des ersten Knöchelquerwellenkörpers (14) verbunden ist und die rechte Knöchelwellen-Endschraube (18) mit dem anderen Ende des ersten Knöchelquerwellenkörpers (14) verbunden ist.

2. Knöchelmechanismus eines Simulationsroboters nach Anspruch 1, wobei der Längsgelenkabschnitt (7) ferner eine vordere Knöchelquerwellen-Dichtungsscheibe (21), eine vordere Knöchelwellen-Endschraube (22), eine hintere Knöchelquerwellen- Dichtungsscheibe (23) und eine hintere Knöchelwellen-Endschraube (24) umfasst;
wobei der zweite Knöchelquerwellenkörper (20) durch eine Mitte des zweiten Knöchelquerwellenlager (19), eine Mitte der vorderen Knöchelquerwellen- Dichtungsscheibe (21) und eine Mitte der hinteren Knöchelquerwellen- Dichtungsscheibe (23) verläuft; die vordere Knöchelquerwellen-Dichtungsscheibe (21) auf einer Seite der Längsaufnahmenut (5) eingesetzt ist und die hintere Knöchelquerwellen-Dichtungsscheibe (23) auf der anderen Seite der Längsaufnahmenut (5) eingesetzt ist;
ein Ende des zweiten Knöchelquerwellenkörpers (20) an einer Außenseite der vorderen Knöchelquerwellen-Dichtungsscheibe (21) freiliegt und das andere Ende des zweiten Knöchelquerwellenkörpers (20) an einer Außenseite der hinteren Knöchelquerwellen-Dichtungsscheibe(23) freiliegt; die zweite Gelenkklemmnut (12) gelenkig mit dem zweiten Knöchelquerwellenkörper (20) des Längsgelenkabschnitts (7) verbunden ist; und
die vordere Knöchelwellen-Endschraube (22) mit einem Ende des zweiten Knöchelquerwellenkörpers (20) verbunden ist und die hintere Knöchelwellen-Endschraube (24) mit dem anderen Ende des zweiten Knöchelquerwellenkörpers (20) verbunden ist.

3. Knöchelmechanismus eines Simulationsroboters nach Anspruch 1, wobei die Unterschenkelanordnung (8) ferner ein Kniegelenk-Leistungsabgabe-Strukturelement (25), ein passives Kniegelenkend-Strukturelement (26), einen ersten Knöchelgelenk-Antriebsmotor (27), einen zweiten Knöchelgelenk-Antriebsmotor (28), ein erstes Kipphebel-Schwenkelement (29) und ein zweites Kipphebel-Schwenkelement (30) umfasst;
ein Kniegelenk-Antriebsmotor zwischen dem Kniegelenk-Leistungsabgabe-Strukturelement (25) und dem passiven Kniegelenkend-Strukturelement (26) angeordnet ist; ein Leistungsabgabeende des Kniegelenk-Antriebsmotors mit dem Kniegelenk-Leistungsabgabe-Strukturelement (25) verbunden ist und das andere Ende des Kniegelenk-Antriebsmotors mit dem passiven Kniegelenkend-Strukturelement (26) verbunden ist;
ein oberer Abschnitt des Unterschenkel-Strukturelements (9) zwischen einem unteren Abschnitt des Kniegelenk-Leistungsabgabe-Strukturelements (25) und einem unteren Abschnitt des passiven Kniegelenkend-Strukturelements (26) angeordnet und mit diesen verbunden ist, ein unterer Abschnitt des Unterschenkel-Strukturelements (9) mit dem Knöchel-Kreuzwellenelement (2) verbunden ist und das Knöchel-Kreuzwellenelement (2) oberhalb der Fußplattenanordnung (45) befestigt ist;
eine erste Motormontageposition (31) und eine zweite Motormontageposition (32) an dem Unterschenkel-Strukturelement (9) ausgebildet sind; der erste Knöchelgelenk-Antriebsmotor (27) an der ersten Motormontageposition (31) befestigt ist, ein Leistungsabgabeende des ersten Knöchelgelenk-Antriebsmotors (27) mit einem oberen Abschnitt des ersten Kipphebel-Schwenkelements (29) verbunden ist und ein unterer Abschnitt des ersten Kipphebel-Schwenkelements (29) mit einer Seite der Knöchelverbindungsstange (3) verbunden ist; und
der zweite Knöchelgelenk-Antriebsmotor (28) an der zweiten Motormontageposition (32) befestigt ist, ein Leistungsabgabeende des zweiten Knöchelgelenk-Antriebsmotors (28) mit einem oberen Abschnitt des zweiten Kipphebel-Schwenkelements (30) verbunden ist und ein unterer Abschnitt des zweiten Kipphebel-Schwenkelements (30) mit der anderen Seite der Knöchelverbindungsstange (3) verbunden ist.

4. Knöchelmechanismus eines Simulationsroboters nach Anspruch 3, wobei eine Ausrichtung des Leistungsabgabeendes des ersten Knöchelgelenk-Antriebsmotors (27) einer Ausrichtung des Leistungsabgabeendes des zweiten Knöchelgelenk-Antriebsmotors (28) entgegengesetzt ist; und eine Länge des ersten Kipphebel-Schwenkelements (29) größer als diejenige des zweiten Kipphebel-Schwenkelements (30) ist.

5. Knöchelmechanismus eines Simulationsroboters nach Anspruch 3, wobei das erste Kipphebel-Schwenkelement (29) eine lange Knöchelverbindungsstange (33), ein erstes Knöchel-Kipphebel-Schwenkelement (34), ein erstes Gelenklager (35), eine erste Verbindungsstangen-Bolzenwelle (36) und ein zweites Gelenklager (37) umfasst;
eine erste Montagebohrung in einem oberen Abschnitt der langen Knöchelverbindungsstange (33) ausgebildet ist, eine zweite Montagebohrung in einem unteren Abschnitt der langen Knöchelverbindungsstange (33) ausgebildet ist und das erste Knöchel-Kipphebel-Schwenkelement (34) über das erste Gelenklager (35) und die erste Verbindungsstangen-Bolzenwelle (36) mit der ersten Montagebohrung verbunden ist; das zweite Gelenklager (37) mit der zweiten Montagebohrung verbunden ist und die lange Knöchelverbindungsstange (33) über das zweite Gelenklager (37) gelenkig mit einer Seite der Knöchelverbindungsstange (3) verbunden ist; und
eine erste Antriebsschnittstelle (38) in dem ersten Knöchel-Kipphebel-Schwenkelement (34) ausgebildet ist und das erste Knöchel-Kipphebel-Schwenkelement (34) über die erste Antriebsschnittstelle (38) mit dem Leistungsabgabeende des ersten Knöchelgelenk-Antriebsmotors (27) verbunden ist.

6. Knöchelmechanismus eines Simulationsroboters nach Anspruch 3, wobei das zweite Kipphebel-Schwenkelement (30) eine kurze Knöchelverbindungsstange (39), ein zweites Knöchel-Kipphebel-Schwenkelement (40), ein drittes Gelenklager (41), eine zweite Verbindungsstangen-Bolzenwelle (42) und ein viertes Gelenklager (43) umfasst;
eine dritte Montagebohrung in einem oberen Abschnitt der kurzen Knöchelverbindungsstange (39) ausgebildet ist, eine vierte Montagebohrung in einem unteren Abschnitt der kurzen Knöchelverbindungsstange (39) ausgebildet ist und das zweite Knöchel-Kipphebel-Schwenkelement (40) über das dritte Gelenklager (41) und die zweite Verbindungsstangen-Bolzenwelle (42) mit der dritten Montagebohrung verbunden ist; das vierte Gelenklager (43) mit der vierten Montagebohrung verbunden ist und die kurze Knöchelverbindungsstange (39) über das vierte Gelenklager (43) gelenkig mit der anderen Seite der Knöchelverbindungsstange (3) verbunden ist; und
eine zweite Antriebsschnittstelle (44) in dem zweiten Knöchel-Kipphebel-Schwenkelement (40) ausgebildet ist und das zweite Knöchel-Kipphebel-Schwenkelement (40) über die zweite Antriebsschnittstelle (44) mit dem Leistungsabgabeende des zweiten Knöchelgelenk-Antriebsmotors (28) verbunden ist.

7. Knöchelmechanismus eines Simulationsroboters nach Anspruch 3, ferner umfassend eine Fußplattenanordnung (45), wobei der Fußplattenadapter (10) oberhalb der Fußplattenanordnung (45) befestigt ist.

## Revendications

1. Mécanisme de cheville de robot de simulation, comprenant un ensemble cheville (1), dans lequel l'ensemble cheville (1) comprend un organe arbre transversal de cheville (2) et une bielle de cheville (3) ;
une rainure de réception transversale (4) et une rainure de réception longitudinale (5) sont formées dans l'organe arbre transversal de cheville (2), la rainure de réception transversale (4) est pourvue d'une partie charnière transversale (6), et la rainure de réception longitudinale (5) est pourvue d'une partie charnière longitudinale (7) ; et la partie charnière transversale (6) et la partie charnière longitudinale (7) sont réparties selon une forme en croix ;
un ensemble segment jambier (8) est agencé au-dessus de l'ensemble cheville (1), et l'ensemble segment jambier (8) comprend un organe structurel de segment jambier (9) ; un adaptateur de plaque de pied (10) est agencé au niveau d'une extrémité inférieure de la bielle de cheville (3) ; une première rainure de serrage de charnière (11) est formée au niveau d'une extrémité inférieure de l'organe structurel de segment jambier (9), et une deuxième rainure de serrage de charnière (12) est formée dans l'adaptateur de plaque de pied (10) ;
la partie charnière transversale (6) est articulée sur la première rainure de serrage de charnière (11) ; la partie charnière longitudinale (7) est articulée sur la deuxième rainure de serrage de charnière (12) ;
la partie charnière transversale (6) comprend un premier palier d'arbre transversal de cheville (13) et un premier corps d'arbre transversal de cheville (14) ; et
la partie charnière longitudinale (7) comprend un deuxième palier d'arbre transversal de cheville (19) et un deuxième corps d'arbre transversal de cheville (20) ;
**caractérisé en ce que**
le premier palier d'arbre transversal de cheville (13) est un roulement à aiguilles (13) situé à l'intérieur de la rainure de réception transversale (4) ;
le deuxième palier d'arbre transversal de cheville (19) est un roulement à aiguilles (19) situé à l'intérieur de la rainure de réception longitudinale (5) ;
dans lequel la partie charnière transversale (6) comprend en outre un joint d'arbre transversal de cheville gauche (15), une vis d'extrémité d'arbre de cheville gauche (16), un joint d'arbre transversal de cheville droit (17) et une vis d'extrémité d'arbre de cheville droite (18) ;
le premier corps d'arbre transversal de cheville (14) passe à travers un centre du premier roulement à aiguilles d'arbre transversal de cheville (13), un centre du joint d'arbre transversal de cheville gauche (15), et un centre du joint d'arbre transversal de cheville droit (17) ; le joint d'arbre transversal de cheville gauche (15) est inséré d'un côté de la rainure de réception transversale (4), et le joint d'arbre transversal de cheville droit (17) est inséré de l'autre côté de la rainure de réception transversale (4) ;
une extrémité du premier corps d'arbre transversal de cheville (14) est exposée sur un côté externe du joint d'arbre transversal de cheville gauche (15), et l'autre extrémité du premier corps d'arbre transversal de cheville (14) est exposée sur un côté externe du joint d'arbre transversal de cheville droit (17) ; la première rainure de serrage de charnière (11) est articulée sur le premier corps d'arbre transversal de cheville (14) de la partie charnière transversale (6) ; et
la vis d'extrémité d'arbre de cheville gauche (16) est reliée à une extrémité du premier corps d'arbre transversal de cheville (14), et la vis d'extrémité d'arbre de cheville droite (18) est reliée à l'autre extrémité du premier corps d'arbre transversal de cheville (14).

2. Mécanisme de cheville de robot de simulation selon la revendication 1, dans lequel la partie charnière longitudinale (7) comprend en outre un joint d'arbre transversal de cheville avant (21), une vis d'extrémité d'arbre de cheville avant (22), un joint d'arbre transversal de cheville arrière (23) et une vis d'extrémité d'arbre de cheville arrière (24) ;
le deuxième corps d'arbre transversal de cheville (20) passe à travers un centre du deuxième roulement à aiguilles d'arbre transversal de cheville (19), un centre du joint d'arbre transversal de cheville avant (21) et un centre du joint d'arbre transversal de cheville arrière (23) ; le joint d'arbre transversal de cheville avant (21) est inséré d'un côté de la rainure de réception longitudinale (5), et le joint d'arbre transversal de cheville arrière (23) est inséré de l'autre côté de la rainure de réception longitudinale (5) ;
une extrémité du deuxième corps d'arbre transversal de cheville (20) est exposée sur un côté externe du joint d'arbre transversal de cheville avant (21), et l'autre extrémité du deuxième corps d'arbre transversal de cheville (20) est exposée sur un côté externe du joint d'arbre transversal de cheville arrière (23) ; la deuxième rainure de serrage de charnière (12) est articulée sur le deuxième corps d'arbre transversal de cheville (20) de la partie charnière longitudinale (7) ; et
la vis d'extrémité d'arbre de cheville avant (22) est reliée à une extrémité du deuxième corps d'arbre transversal de cheville (20), et la vis d'extrémité d'arbre de cheville arrière (24) est reliée à l'autre extrémité du deuxième corps d'arbre transversal de cheville (20).

3. Mécanisme de cheville de robot de simulation selon la revendication 1, dans lequel l'ensemble segment jambier (8) comprend en outre un organe structurel de sortie de puissance d'articulation de genou (25), un organe structurel d'extrémité passive d'articulation de genou (26), un premier moteur d'entraînement d'articulation de cheville (27), un deuxième moteur d'entraînement d'articulation de cheville (28), un premier organe de balancement de bras oscillant (29) et un deuxième organe de balancement de bras oscillant (30) ;
un moteur d'entraînement d'articulation de genou est agencé entre l'organe structurel de sortie de puissance d'articulation de genou (25) et l'organe structurel d'extrémité passive d'articulation de genou (26) ; une extrémité de sortie de puissance du moteur d'entraînement d'articulation de genou est reliée à l'organe structurel de sortie de puissance d'articulation de genou (25), et l'autre extrémité du moteur d'entraînement d'articulation de genou est reliée à l'organe structurel d'extrémité passive d'articulation de genou (26) ;
une partie supérieure de l'organe structurel de segment jambier (9) est reliée entre une partie inférieure de l'organe structurel de sortie de puissance d'articulation de genou (25) et une partie inférieure de l'organe structurel d'extrémité passive d'articulation de genou (26), une partie inférieure de l'organe structurel de segment jambier (9) est reliée à l'organe arbre transversal de cheville (2), et l'organe arbre transversal de cheville (2) est fixé au-dessus de l'ensemble plaque de pied (45) ;
une première position de montage de moteur (31) et une deuxième position de montage de moteur (32) sont formées sur l'organe structurel de segment jambier (9) ; le premier moteur d'entraînement d'articulation de cheville (27) est fixé à la première position de montage de moteur (31), une extrémité de sortie de puissance du premier moteur d'entraînement d'articulation de cheville (27) est reliée à une partie supérieure du premier organe de balancement de bras oscillant (29), et une partie inférieure du premier organe de balancement de bras oscillant (29) est reliée à un côté de la bielle de cheville (3) ; et
le deuxième moteur d'entraînement d'articulation de cheville (28) est fixé à la deuxième position de montage de moteur (32), une extrémité de sortie de puissance du deuxième moteur d'entraînement d'articulation de cheville (28) est reliée à une partie supérieure du deuxième organe de balancement de bras oscillant (30), et une partie inférieure du deuxième organe de balancement de bras oscillant (30) est reliée à l'autre côté de la bielle de cheville (3).

4. Mécanisme de cheville de robot de simulation selon la revendication 3, dans lequel une orientation de l'extrémité de sortie de puissance du premier moteur d'entraînement d'articulation de cheville (27) est opposée à une orientation de l'extrémité de sortie de puissance du deuxième moteur d'entraînement d'articulation de cheville (28) ; et une longueur du premier organe de balancement de bras oscillant (29) est plus grande que celle du deuxième organe de balancement de bras oscillant (30).

5. Mécanisme de cheville de robot de simulation selon la revendication 3, dans lequel le premier organe de balancement de bras oscillant (29) comprend une longue bielle de cheville (33), un premier organe de balancement de bras oscillant de cheville (34), un premier palier sphérique (35), un premier arbre de broche de bielle (36) et un deuxième palier sphérique (37) ;
un premier trou de montage est formé dans une partie supérieure de la bielle longue de cheville (33), un deuxième trou de montage est formé dans une partie inférieure de la bielle longue de cheville (33), et le premier organe de balancement de bras oscillant de cheville (34) est relié au premier trou de montage à travers le premier palier sphérique (35) et le premier arbre de broche de bielle (36) ; le deuxième palier sphérique (37) est relié au deuxième trou de montage, et la bielle longue de cheville (33) est articulée sur un côté de la bielle de cheville (3) à travers le deuxième palier sphérique (37) ; et
une première interface d'entraînement (38) est formée dans le premier organe de balancement de bras oscillant de cheville (34), et le premier organe de balancement de bras oscillant de cheville (34) est relié à l'extrémité de sortie de puissance du premier moteur d'entraînement d'articulation de cheville (27) à travers la première interface d'entraînement (38).

6. Mécanisme de cheville de robot de simulation selon la revendication 3, dans lequel le deuxième organe de balancement de bras oscillant (30) comprend une bielle courte de cheville (39), un deuxième organe de balancement de bras oscillant de cheville (40), un troisième palier sphérique (41), un deuxième arbre de broche de bielle (42) et un quatrième palier sphérique (43) ;
un troisième trou de montage est formé dans une partie supérieure de la bielle courte de cheville (39), un quatrième trou de montage est formé dans une partie inférieure de la bielle courte de cheville (39), et le deuxième organe de balancement de bras oscillant de cheville (40) est relié au troisième trou de montage à travers le troisième palier sphérique (41) et le deuxième arbre de broche de bielle (42) ; le quatrième palier sphérique (43) est relié au quatrième trou de montage, et la bielle courte de cheville (39) est articulée sur l'autre côté de la bielle de cheville (3) à travers le quatrième palier sphérique (43) ; et
une deuxième interface d'entraînement (44) est formée dans le deuxième organe de balancement de bras oscillant de cheville (40), et le deuxième organe de balancement de bras oscillant de cheville (40) est relié à l'extrémité de sortie de puissance du deuxième moteur d'entraînement d'articulation de cheville (28) à travers la deuxième interface d'entraînement (44).

7. Mécanisme de cheville de robot de simulation selon la revendication 3, comprenant en outre un ensemble plaque de pied (45), dans lequel l'adaptateur de plaque de pied (10) est fixé au-dessus de l'ensemble plaque de pied (45).
